# EUROPEAN PATENT APPLICATION

(11) **EP 2 221 842 A2**
(43) Date of publication of application: **25.08.2010**
(21) Application number: 09152316.7
(22) Date of filing: 06.02.2009
(51) Int. Cl.: H01G 9/20, H01M 14/00

(54) **Dye-sensitised solar cells**

(71) Applicant: University Of Wales, Bangor, Wales LL57 2DG (GB)
(72) Inventor: Holliman, Peter, Conwy, LL32 8NW (GB); Vaca Velasco, Beatriz, Chester CH2 3AL (GB)
(74) Representative: Brandon, Paul Laurence

(57) **Abstract**

The present invention relates to the field of dye sensitised solar cell and to a method for preparing them rapidly and efficiently focussing on a rapid method for dye sensitisation.

## Description

### BACKGROUND OF THE INVENTION

### 1. Field of the Invention

The present invention relates to the field of dye sensitised solar cell and to a method for preparing them rapidly and efficiently focussing on a rapid method for dye sensitisation.

### 2. Description of the Related Art

Solar cells are traditionally prepared using solid state semiconductors. Cells are prepared by juxtaposing two doped crystals, one with a slightly negative charge, thus having additional free electrons (n-type semiconductor) and the other with a slightly positive charge, thus lacking free electrons (p-type semiconductor). When these two doped crystals are contacted, extra electrons from the n-type semiconductor flow through the n-p junction to reduce the lack of electrons in the p-type semiconductor. At the p-n junction, charge carriers are depleted on one side and accumulated on the other side thereby producing a potential barrier. When photons produced by sunlight strike the p-type semiconductor, they induce transfer of electrons bound in the low energy levels to the conduction band where they are free to move. A load is placed across the cell in order to transfer electrons, through an external circuit, from the p-type to the n-type semiconductor. The electrons then move spontaneously to the p-type material, back to the low energy level they had been extracted from by solar energy. This motion creates an electrical current.

Typical solar cell crystals are prepared from silicon because photons having frequencies in the visible light range have enough energy to take electrons across the band-gap between the low energy levels and the conduction band. One of the major drawbacks of these solar cells is that the most energetic photons in the violet or ultra-violet frequencies have more energy than necessary to move electrons across the band-gap, resulting in considerable waste of energy that is merely transformed into heat. Another important drawback is that the p-type layer must be sufficiently thick in order to have a chance to capture a photon, with the consequence that the freshly extracted electrons also have a chance to recombine with the created holes before reaching the p-n junction. The maximum reported efficiencies of the silicon-type solar cells are thus of 20 to 25% or lower for solar cell modules due to losses in combining individual cells together.

Another important problem of the silicon-type solar cell is the cost in terms of monetary price and also in terms of embodied energy, that is the energy required to manufacture the devices.

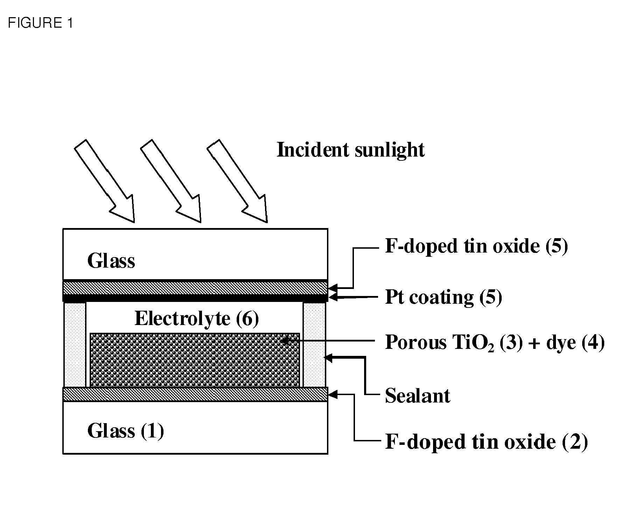

Dye-sensitised solar cells (DSSC) have been developed in 1991 by O'Regan and Grätzel (O'Regan B. and Grätzel M., in Nature, 1991, 353, 737-740). They are produced with low cost material and do not require complex equipment for their manufacture. They separate the two functions provided by silicon: the bulk of the semiconductor is used for charge transport and the photoelectrons originate from a separate photosensitive dye. The cells are sandwich structures represented in Figure 1 and typically prepared by the steps of:
a) providing a transparent plate (1) typically prepared from glass;
b) coating this plate with a transparent conducting oxide (TCO) (2), preferably with doped tin oxide;
c) applying a paste of metal oxide (3), generally titanium dioxide, to the coated glass plate on the TCO side;
d) heating the plate to a temperature of about 450 °C-500 ºC for a period of time of at least one hour;
e) soaking the coated plate of step d) in a dye solution for a period of time of about 24 hours in order to covalently bind the dye to the surface of the titanium dioxide (4);
f) providing another TCO coated transparent plate further coated with platinum (5);
g) sealing the two glass plates and introducing an electrolyte solution (6) between said plates in order to encase the dyed metal oxide and electrolyte between the two conducting plates and to prevent the electrolyte from leaking.

In these cells, photons strike the dye moving it to an excited state capable of injecting electrons into the conducting band of the titanium dioxide from where they diffuse to the anode. The electrons lost from the dye/TiO₂ system are replaced by oxidising the iodide into triiodide at the counter electrode, which reaction is sufficiently fast to enable the photochemical cycle to continue.

The DSSC generate a maximum voltage comparable to that of the silicon solar cells, of the order of 0.7 V. An important advantage of the DSSC as compared to the silicon solar cells is that they inject electrons in the titanium dioxide conduction band without creating electron vacancies nearby, thereby preventing quick electron/hole recombinations. They are therefore able to function in low light conditions where the electron/hole recombination becomes the dominant mechanism in the silicon solar cells. The present DSSC are however not very efficient in the longer wavelength part of the visible light frequency range, in the red and infrared region, because these photons do not have enough energy to cross the titanium dioxide band-gap or to excite most traditional ruthenium bipyridyl dyes.

The major disadvantage of the DSSC resides in the long time necessary to dye the titanium dioxide nanoparticles: it takes between 12 and 24 hours to dye the layer of titanium dioxide necessary for solar cell applications. Another major difficulty with the DSSC is the electrolyte solution: The cells must be carefully sealed in order to prevent liquid electrolyte leakage.

There is thus a need to prepare robust solar cells that can be prepared rapidly at reduced cost.

### SUMMARY OF THE INVENTION

It is an objective of the present invention to reduce the amount of time necessary to dye the metal oxide.

It is another objective of the present invention to reduce the amount of time necessary to prepare dye sensitised solar cells.

It is also an objective of the present invention to prepare solar panels.

It is yet another objective of the present invention to sensitise the metal oxide with more than one dye in order to extend the spectral response of the device as widely as possible across the electromagnetic spectrum.

In accordance with the present invention, the foregoing objectives are realised as defined in the independent claims. Preferred embodiments are defined in the dependent claims.

### BRIEF DESCRIPTION OF THE DRAWINGS.

Figure 1 is a schematic representation of a dye-sensitised solar cell.
Figure 2 is a schematic representation of the dye-sensitised solar cell according to the examples of the present invention.

### DESCRIPTION OF THE PREFFERED EMBODIMENTS

The present invention provides a method for reducing the dyeing time of metal oxide by injecting a solution comprising the dye or the combination of dyes between the two sealed electrodes of a solar cell device simultaneously with or before the electrolyte.

It is important that the metal oxide surface is in the correct state and does not adsorb water, CO₂ or other gases from the atmosphere before it is dyed. Sealing the electrodes together enables the dye solution to be pumped through the device in the absence of interference. The dyeing time is reduced from a period of time of several hours to a period of time of at most 15 minutes, preferably at most 10 minutes.

Without wishing to be bound by a theory, it is believed that dyeing a thin film of metal oxide takes place in three steps:
a) chemisorption of the dye on the surface of the metal oxide nanoparticles;
b) diffusion of the dye through the solution to the surface of metal oxide nanoparticles;
c) percolation of the dye through the porous metal oxide film.

Chemisorption is a fast process: it involves covalent bonding of the dye molecules to the metal oxide molecules. The dyeing time is thus controlled by diffusion and percolation, percolation being the slowest process. It has surprisingly been found that pumping the dye solution between the two sealed electrodes of the solar cell device considerably shortens the diffusion and percolation times.

Accordingly, the present invention provides a method for preparing dye sensitised solar cells that comprises the steps of:
a) providing a first electrode prepared from an electro-conducting substrate;
b) applying one or more layers of a paste of metal oxide nanoparticles on the conduction side of the substrate;
c) subjecting the coated substrate to a thermal treatment for each layer of metal oxide paste applied;
d) providing a second electrode, the counter-electrode, prepared from a transparent substrate coated with a transparent conducting oxide and additionally coated with platinum or carbon;
e) optionally pre-dyeing the first electrode coated with metal oxide of step b) with a solution comprising one or more dyes in order to covalently bind said dye(s) to the surface of the metal oxide;
f) piercing at least two perforations in the first and/or second electrodes and sealing said electrodes together with glue or with a thermoplastic polymer;
g) pumping one or more solution(s) comprising the same one or more dyes as those of the pre-dyeing step along with cosorbents through the holes in the electrodes in order to covalently bind said dye(s) to the surface of the metal oxide;
h) injecting an electrolyte through the holes in the electrodes;
i) sealing the holes in the electrodes with glue or with a thermoplastic polymer;
j) providing an external connection between the two electrodes for electron transport;
characterised in that dyeing is carried out between the sealed electrodes at a temperature of from 10 to 70 °C with the electrolyte added not more than 10 minutes after the dye, said dyeing being completed in a period of time of no more than 15 minutes.

Optionally, the dye or dyes are introduced between the sealed electrodes under vacuum.

The first electrode may be transparent or not, preferably, it is transparent. It can be prepared by coating a glass or a polymer substrate having a thickness of from 1 to 4 mm with a conducting oxide. The conducting oxide can be selected from doped zinc oxide or tin oxide doped with indium or fluoride. Preferably it is tin oxide, more preferably it is tin oxide doped with fluorine.

Alternatively, the first electrode may be prepared from a metal such as for example steel, aluminium, titanium or a metal oxide coated metal.

The light can strike the dye-sensitised cell either from the metal oxide side (normal illumination) or from the other side (reverse illumination). The efficiency of normal illumination is about twice that of the reverse illumination but it can only be selected if the first electrode is transparent and thus prepared from glass or transparent polymer.

The nanoparticle paste is preferably prepared from a colloidal solution of metal oxide. The electronic contact between the particles is produced by brief sintering carried out at by thermal treatment at a temperature ranging between 300 and 600 °C, preferably between 400 and 500 °C and more preferably at a temperature of about 450 °C. The thermal treatment is followed by cooling to a temperature of from 100 to 140 deg C, preferably to a temperature of about 120 deg C. The size of the particles and pores making up the film is determined by the size of the particles in the colloidal solution. The internal surface of the film is an important parameter, also determined by the particles' size and by the film's thickness. The pore size must be large enough to allow easy diffusion of the electrolyte. The particle sizes preferably range from 10 to 30 nm, preferably from 12 to 20 nm. The film thickness ranges from 5 to 20 µm, preferably from 9 to 15 µm.

The second electrode is a transparent substrate prepared from glass or polymer. It is coated with a transparent conducting oxide (TCO), preferably with tin oxide, more preferably, with fluorine doped tin oxide. It is preferably further coated with platinum or carbon, more preferably with platinum.

In a preferred embodiment according to the present invention, two perforations are pierced in either the first or in the second electrode: one for injecting the dye(s), cosorbent and electrolyte and the other for the expulsion of excess product if any. The liquids are injected under a small pressure to gently fill the empty space between the metal oxide paste and the second electrode, represented by (6) on Figure 1.

The dye or combination of dyes is selected from one or more compounds having maximum absorption capability in the visible light range. A photon of light absorbed by the dye injects an electron into one of its excited states. This excited electron is in turn injected into the conduction band of the metal oxide. The dye must also have the capability to be subsequently reduced by a redox couple present in the electrolyte. Suitable dyes can be selected from ruthenium bipyridyl complexes, coumarins, phthalocyanines, squaraines or indolines. The most commonly used dyes are ruthenium bipyridyl complexes.

The cosorbents are preferably selected from *tertiary* butyl pyridine and/or a pH buffer and/or chenodeoxycholic acid. Cosorbents are added to prevent dye aggregation and/or to improve the open circuit voltage, that is the voltage at zero current, V_{oc,} by shifting titanium band edge to negative potentials and/or to enhance electron lifetime in the TiO₂ and/or to help buffer the dye solution which aids chemisorption of the dye as this is a pH controlled reaction.

The glue or thermoplastic polymers are carefully selected to seal the electrodes and subsequently the holes pierced in the electrodes. Leakage of the electrolyte must be avoided as it reduces the lifetime of the solar cell. Suitable glues are selected from examples such as epoxy resins and the preferred thermoplastic polymers are selected from examples such as Surlyn ® (Du Pont). The thickness of the sealant layer is of from 20 to 35 µm, preferably of about 30 µm. As the layer of metal oxide is thinner than the layer of sealant, there is an empty space above the metal oxide which should be minimised. It is however not desirable to increase the thickness of the metal oxide because it would increase the percolation time and therefore the dyeing time. The best compromise has been achieved with a sealant thickness of between 20 and 30 µm and a metal oxide thickness of between 10 and 12 µm.

The electrolyte can be advantageously selected from three main groups of compounds:
I) liquid nitrile solvent containing a redox couple and current carriers;
II) gel electrolyte containing a redox couple and current carriers;
III) solid conducting electrolytes.

The most common electrolyte is iodide/triiodide redox electrolyte in a nitrile based solvent. Ionic liquids such as for example imidazolium derivatives, gel electrolytes such as L-valine or solid electrolytes such as OMeTAD -2,2',7,7'-tetrakis(N,N-di-*p*-methoxyphenyl-amine)9,9'-spirobifluorene or Cul or CuSCN can also be used as electrolytes.

The electrolyte is introduced between the sealed electrodes simultaneously with or immediately after the solution comprising the dye or dyes and the cosorbents. In this description, immediately after means within at most 10 minutes after the dye(s), preferably at most 5 minutes, more preferably at most 2 minutes and most preferably at most 1 minute. This prevents the metal oxide surface from drying out or being exposed to atmospheric conditions, either of which resulting in poor device performance.

It has been shown, for example by O'Regan and Grätzel (O'Regan B. and Grätzel B. in Letters to Nature, 353, 1991, 737-740) that nanostructured TiO₂ films used in conjunction with suitable charge transfer dyes are very efficient in converting visible light photons into electric current. They are particularly useful under diffuse daylight, where they perform better than the conventional silicon devices. The spectral distribution of diffuse daylight overlaps favourably with the absorption spectrum of dye-coated TiO₂ film.

The dye-sensitised solar cells also offer long-term stability.

The present invention also provides dye-sensitised solar cells obtainable by the present method.

The present invention further provides dye-sensitised solar cells comprising in whole or in part the individual solar cells produced according to the present invention.

The present invention also provides a method for continuously producing dye-sensitised solar cells in the form of a roll or sheet that comprises the steps of:
a) providing a first electrode as a moving roll or sheet of substrate, preferably a roll;
b) providing a first roller coated with metal oxide or a first dispenser for printing said metal oxide continuously on the central portion of the substrate;
c) sintering the printed metal oxide by thermal treatment, followed by cooling;
d) providing a second roller coated with sealant or second dispenser for applying said sealant on the substrate, on the same side as the metal oxide paste and on each side of said metal oxide paste;
e) providing a second electrode as a moving roll or sheet of transparent substrate which has been previously coated with transparent conducting oxide and platinum or carbon and has been previously pierced with holes so as to form perforations;
f) bringing together the first electrode of step d) and the second electrode of step e) and applying pressure and/or heat to seal said two electrodes;
g) injecting the dye(s) and cosorbent into the perforations provided through the second electrode;
h) injecting the electrolyte through the perforations provided in the second electrode simultaneously with the injection of the dye(s) and cosorbent of step g) or within 10 minutes at the most after the dye(s), preferably at the same time as the dye(s);
i) sealing the perforations in the second electrode;
j) storing a roll or sheet of the dye-sensitised solar cells for subsequent retrieval or cutting the continuous roll of the dye-sensitised solar cells into individual solar cells for storage and subsequent retrieval.

In an alternative embodiment according to the present invention, the sealant can be applied to the second electrode at appropriate spacing to frame the metal oxide present on the first electrode.

The dye(s), cosorbent and electrolyte are injected through the holes at a speed carefully selected to gently imbibe the metal oxide coated on the first electrode and achieve dyeing in less than 15 minutes. Increasing the temperature decreases the dyeing time but it is limited to a temperature ranging between room temperature and at most 70 deg C in order to prevent evaporation of the cosorbents.

### EXAMPLES.

In these examples, current voltage characteristics were measured using simulated AM 1.5 illumination (100 mW cm⁻² or 1 Sun).

### Comparitive examples

Sandwich- type DSC cells devices were prepared following the structure described in Figure 1. The working photoelectrode was prepared on fluorine tin oxide-coated glass with resistance of 8 - 15 Ω/cm² from a thin film of opaque/transparent titania having a thickness of 6 to 18 µm, with a working area of 0.72 -1.0 cm⁻². The TiO₂ film working electrodes were heated at a temperature of 450 °C for a period of time of 30 minutes and then allowed to cool to 100 °C before being dipped into the dye solution.

Dye solutions containing the di-ammonium salt of *cis*-bis(4,4'-dicarboxy-2,2'-bipyridine)dithiocyanato ruthenium(II), commonly known as N719, were prepared either in absolute ethanol or in a 1:1 mixture of acetonitrile/*tert*-butyl alcohol and. absolute ethanol. The concentration used in the ethanol solution was 1 mM and 0.5 mM for the acetonitrile/*tert-*butanol solvent. The titanium dioxide films were exposed to dye solution for time periods of 1, 5, 8 and 24 h. After dyeing, a thermoplastic polymer gasket (Surlyn^{®}) was placed around the photoelectrode and a second transparent-conducting glass coated electrode with a platinum layer, the counter electrode, was placed on top and the electrodes sealed together at a temperature of 120 °C. A commercial liquid electrolyte containing iodine/tri-iodide in nitrile solvent (Dyesol Ltd, Australia) was added through a hole in the counter electrode which was then sealed using thermoplastic polymer (Surlyn^{®}). Table 1 displays the efficiencies and fill factors for comparative cells (0.72 cm²) dyed using N719 for time periods ranging from 1 to 24 h.

**TABLE 1.**

| | | | | |
|---|---|---|---|---|
| | **Dyeing time** | | | |
| | **1 h** | **5 h** | **8 h** | **24 h** |
| **Fill Factor** | 0.32 | 0.52 | 0.53 | 0.52 |
| **Efficiency** | 0.5 | 3.9 | 4.2 | 4.1 |

### Example according to the invention.

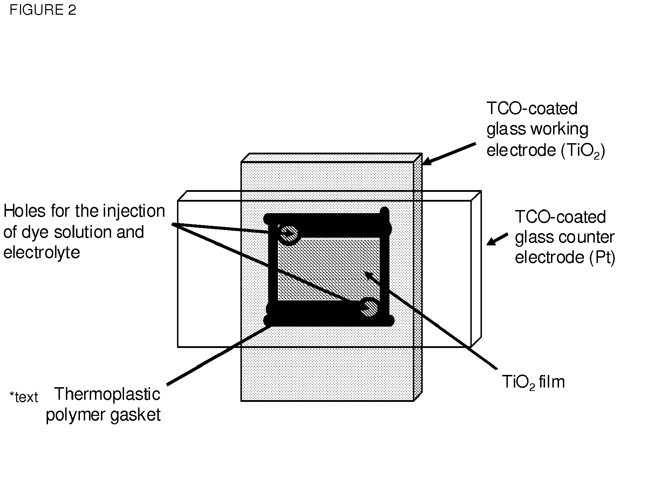

### Sandwich- type DSC cells devices were prepared as shown in Figure 2

The working photoelectrode was prepared on fluorine tin oxide-coated glass (8-15 Ω/cm²) from a thin film of opaque/transparent titania having a thickness of 6-18 µm with a working area of 0.72 - 1.0 cm². The TiO₂ film working electrodes were heated at a temperature of 450 °C for a period of time of 30 minutes and then allowed to cool to 100 °C before a thermoplastic polymer gasket (Surlyn^{®}) was placed around the photoelectrode. A second transparent-conducting glass coated electrode with a platinum layer, the counter electrode, was placed on top and the electrodes were sealed together at a temperature of 120 °C.

Dye solutions containing the di-ammonium salt of escis -bis(4,4'-dicarboxy-2,2'-bipyridine)dithiocyanato ruthenium(II), commonly known as N719, were prepared in a 1:1 mixture of acetonitrile/*tert*-butyl alcohol and absolute ethanol. The concentration used was 0.016 mg/l and the dye solution was pumped through a hole in the counter electrode, with or without the addition of vacuum to aid the process, for a time period of between 5 and 10 minutes. A commercial liquid electrolyte containing iodine/tri-iodide in nitrile solvent (Dyesol Ltd, Australia) was then added through a hole in the counter-electrode as soon as possible, and not more than 5 minutes afterwards. This fill hole was then sealed using thermoplastic polymer (Surlyn^{®}). All materials necessary for the cell fabrication were purchased from Dyesol.

### Example 1

2 ml of 0.016 mg/l of N719 dye in 1:1 mixture of acetonitrile and *tert*-butanol was pumped through the cell over a period of 5 minutes giving rise to a dye uptake of 0.105 mg by the titania film. This gave a cell efficiency of 3.1 % and a fill factor of 0.53. Here the electrolyte was added within 5 minutes after the dye.

### Example 2

2 ml of 0.016 mg/l of N719 dye in a 1:1 mixture of acetonitrile and *tert*-butanol was pumped through the cell over a period of 10 minutes with the addition of vacuum to aid the process, giving rise to a dye uptake of 0.076 mg by the titania film. This gave a cell efficiency of 3.7 % and a fill factor of 0.54. Here the electrolyte was added within 5 minutes after the dye.

## Claims

1. A method for reducing the dyeing time of metal oxide by injecting or pumping a solution comprising dye or combination of dyes and cosorbents between the two sealed electrodes of a solar cell device simultaneously with or before an electrolyte.

2. A method for preparing dye sensitised solar cells that comprises the steps of:
a) providing a first electrode prepared from an electro-conducting substrate;
b) applying one or more layers of a paste of metal oxide nanoparticles on the conduction side of the substrate;
c) subjecting the coated substrate to a thermal treatment for each layer of metal oxide paste applied;
d) providing a second electrode, the counter-electrode, prepared from a transparent substrate coated with a transparent conducting oxide and additionally coated with platinum or carbon;
e) optionally pre-dyeing the first electrode coated with metal oxide of step b) with a solution comprising one or more dyes in order to covalently bind said dye(s) to the surface of the metal oxide;
f) piercing at least two perforations in the first and/or second electrodes and sealing said electrodes together with glue or with a thermoplastic polymer;
g) pumping a solution comprising the same one or more dyes as those of the pre-dyeing step along with cosorbents through the holes in the electrodes, optionally under vacuum, in order to covalently bind said dye(s) to the surface of the metal oxide;
h) injecting an electrolyte through the holes in the electrodes;
i) sealing the holes in the electrodes with glue or with a thermoplastic polymer;
j) providing an external connection between the two electrodes for electron transport;
**characterised in that** dyeing is carried out between the sealed electrodes at a temperature of from 10 to 70 °C with the electrolyte added not more than 10 minutes after the dye, said dyeing being completed in a period of time of no more than 15 minutes

3. The method of claim 2 wherein the electro-conducting substrate is a glass or polymer plate coated with a conducting oxide, preferably transparent.

4. The method of claim 3 wherein the conducting oxide is tin oxide, preferably doped with fluorine.

5. The method of claim 2 wherein the electro-conducting substrate is a metal plate, preferred metals being selected from steel, aluminium, titanium or a metal oxide coated metal.

6. The method of any one of claims 2 to 5 wherein the thermal treatment is carried out at a temperature of from 300 to 600 °C for a period of time of at least one hour.

7. The method of any one of claims 2 to 6 wherein the metal oxide paste of step b) is prepared from nanoparticles of titanium dioxide.

8. The method of any one of claims 2 to 7 wherein the second electrode is a transparent plate prepared from glass or polymer and coated with a transparent tin oxide doped with fluorine and additionally coated with platinum.

9. The method of any one of the preceding claims wherein the electrolyte is injected or pumped through the perforations in the electrodes simultaneously with the dye or dyes or at most 10 minutes after the dye or dyes.

10. The method of any one of the preceding claims wherein the electrolyte is selected from a liquid nitrile solvent containing a redox couple and current carriers, or a gel electrolyte containing a redox couple and current carriers, or a solid conducting polymer.

11. The method of any one of the preceding claims wherein the one or more dyes are selected from one or more compounds capable of absorbing visible light and injecting electrons from one of said compound's excited state into the conduction band of the metal oxide and further capable of being reduced by a redox couple in the electrolyte.

12. The method of claim 11 wherein the one or more dyes are selected from ruthenium bipyridyl complexes, coumarins, phthalocyamines, squaraines or indolines.

13. The method of any one of the preceding claims wherein the cosorbent is selected from *tertiary* butyl pyridine and/or a pH buffer and/or chenodeoxycholic acid.

14. A method for increasing light absorbance across the electromagnetic spectrum by multiple dyeing of dye sensitised solar cells.

15. Dye sensitised solar cells obtained by the method of any one of claims 2 to 14.

16. A solar panel comprising in whole or in part dye sensitised solar cells prepared according to any one of claims 2 to 14.
